# EUROPÄISCHE PATENTANMELDUNG

(11) **EP 1 003 347 A2**
(43) Veröffentlichungstag der Anmeldung: **24.05.2000**
(21) Anmeldenummer: 99114720.8
(22) Anmeldetag: 28.07.1999
(51) Int. Cl.: H04Q 11/04

(54) **Netzwerk von mehreren Endgeräten und Verfahren zum Betrieb eines Netzwerks vom mehreren Endgeräten**

(30) Priorität: 21.10.1998 DE 19848359
(71) Anmelder: ROBERT BOSCH GMBH, 70442 Stuttgart (DE)
(72) Erfinder: Dappa, Henry, 64319 Pfungstadt (DE)

(57) **Zusammenfassung**

Die Erfindung betrifft ein Netzwerk (1) von mehreren Endgeräten (2), insbesondere von Computern, die untereinander über eine Schnittstelle (4) für jedes Endgerät (2) und mindestens einen Asynchronous-Transfer-Mode (ATM)-Vermittlungsswitch (5) verbunden sind, wobei auf mindestens einem der Endgeräte (2) Informationen zum Konfigurieren, Überwachen und Betrieb der Schnittstellen (4) abgelegt sind und wobei die Endgeräte (2) ATM-Anschlüsse aufweisen und untereinander über virtuelle ATM-Kanäle (6) Daten austauschen. Um ein solches Netzwerk (1) dahingehend auszugestalten und weiterzubilden, daß der Speicherplatzbedarf in den Endgeräten (2) für eine Treiber-Software und der Aufwand für Installation und Wartung der Treiber-Software reduziert werden kann, wird vorgeschlagen, daß nur auf einigen der Endgeräte (2), den sog. Proxy-Agenten (3), Mittel zum Steuern des Verbindungsaufbaus und Verbindungsabbaus zwischen den Endgeräten (2) und zum Konfigurieren, Überwachen und Betrieb der Schnittstellen (4) abgelegt sind.

## Beschreibung

Die vorliegende Erfindung betrifft ein Netzwerk von mehreren Endgeräten, insbesondere von Computern, die untereinander über eine User-Network-Interface (UNI) - Schnittstelle für jedes Endgerät und mindestens einen Asynchronous-Transfer-Mode (ATM)-Vermittlungsswitch verbunden sind, wobei auf mindestens einem der Endgeräte Informationen zum Konfigurieren, Überwachen und Betrieb der Schnittstellen abgelegt sind und wobei die Endgeräte ATM-Anschlüsse aufweisen und untereinander über virtuelle ATM-Kanäle Daten austauschen.

Die Erfindung betrifft außerdem ein Verfahren zum Betrieb eines Netzwerks von mehreren Endgeräten, insbesondere von Computern, die untereinander über eine User-Network-Interface (UNI)-Schnittstelle für jedes Endgerät und mindestens einen Asynchronous-Transfer-Mode (ATM)-Vermittlungsswitch verbunden sind, wobei auf mindestens einem der Endgeräte Informationen zum Konfigurieren, Überwachen und Betrieb der Schnittstellen abgelegt sind und wobei die Endgeräte ATM-Anschlüsse aufweisen und untereinander über virtuelle ATM-Kanäle Daten austauschen.

### Stand der Technik

Aus dem Stand der Technik sind derartige Netzwerke zum Vernetzen von Endgeräten, insbesondere von Computern, und zur Datenübertragung von einem Endgerät zu einem anderen Endgerät innerhalb des Netzwerks bekannt. Bei diesen Netzwerken werden die Daten nach dem Asynchronous-Transfer-Mode (ATM)-Verfahren übertragen. Dieses Übertragungsverfahren erlaubt eine hohe Übertragungsrate von derzeit bis zu 625 Mbit/s pro Anschluß und kann für jeden Datenübertragungsvorgang eine bestimmte Dienstgüte garantieren. Zur Bestimmung der Dienstgüte wird jedem Datenübertragungsvorgang eine bestimmte Dienstklasse zugeordnet, die darüber entscheidet, ob die Daten eines Datenübertragungsvorgangs bevorzugt oder erst dann übertragen werden, wenn auf dem ATM-Anschluß Übertragungskapazitäten frei sind.

Die erste Dienstklasse (Constant Bit Rate, CBR) dient bspw. zur Übertragung von Sprachdaten. Die Daten der ersten Klasse werden bevorzugt übertragen und kommen mit einer garantierten kurzen Zeitverzögerung bei dem empfangenden Endgerät an. Dafür sorgt eine zentrale Steuereinheit, der sog. ATM-Vermittlungsswitch, der die gesamte Datenübertragung in dem ATM-Netzwerk zentral steuert. Die zweite Klasse ist in zwei Unterklassen unterteilt, nämlich in die sog. Variable Bit Rate - Real Time (VBR-rt)-Klasse bspw. zur Übertragung von Videodaten und in die sog. Variable Bit Rate - Non Real Time (VBR-nrt)-Klasse, bspw. zur Übertragung von sensitiven Textnachrichten. Die dritte Klasse (Available Bitrate, ABR) dient zur Übertragung von Textnachrichten ohne Bandbreitengarantien bei Minimierung der Datenverluste durch Sender-Empfänger-Rückkopplung. Und in der vierten Klasse (Unspecified Bit Rate, UBR) werden alle sonstigen Daten übertragen, deren Ankunftszeitpunkt und Verlustrate von untergeordneter Bedeutung ist. Durch die Möglichkeit, den zu übertragenden Daten eine bestimmte Dienstklasse zuordnen zu können, können Daten der ersten Dienstklasse nahezu verzögerungsfrei zu dem Empfänger übermittelt werden. Das ist insbesondere bei der Übertragung von Sprachdaten wichtig, um eine gute Verständlichkeit der Sprache sicherzustellen.

Im Gegensatz dazu kann bei herkömmlichen Local-Area-Networks (LANs) für eine Datenübertragung keine bestimmte Dienstgüte garantiert werden, da das LAN ein sog. shared medium ist, das dezentral von den einzelnen gleichberechtigten Endgeräten gesteuert wird. Bei einer großen Anzahl von zu übertragenden Daten, einem sog. Datenburst, kann es zu erheblichen Zeitverzögerungen der übertragenen Daten kommen.

Die Endgeräte, die in dem ATM-Netzwerk miteinander vernetzt sind, weisen ATM-Anschlüsse auf, mit denen sie über ATM-Kanäle mit den ATM-Vermittlungsswitches verbunden sind. Pro ATM-Netzwerk steht üblicherweise ein ATM-Vermittlungsswitch zur Verfügung. Zwischen dem ATM-Vermittlungsswitch und den Endgeräten ist in den ATM-Kanälen jeweils eine Schnittstelle angeordnet. Die Schnittstellen sind üblicherweise als User-Network-Interface (UNI) - Schnittstellen ausgebildet. Die Informationen zum Konfigurieren, Überwachen und Betrieb der UNI-Schnittstellen sind bspw. in einer Datenbank auf dem mindestens einen Endgerät abgelegt. Eine solche Datenbank stellt die komfortabelste Alternative dar, grundsätzlich können die Informationen jedoch auch in einet Datei abgelegt sein. Die Datenbank ist üblicherweise als eine Management-Information-Base (MIB)-Datenbank ausgebildet. Die in dem mindestens einen Endegerät abgelegten Informationen werden als Integrated-Local-Management-Interface (ILMI)-Informationen bezeichnet. Die ILMI-Informationen umfassen bspw. Informationen zur Identifikation der virtuellen ATM-Kanäle oder Parameter der Schnittstellen (Adresse, Übertragungsrate, etc.). Zur Identifikation der virtuellen ATM-Kanäle wird eine sog. Virtual-Path-Connection-Identifier (VPCI)-Nummerierung bzw. eine Virtual-Path-Identifier (VPI)-Nummerierung verwendet.

Nach dem Stand der Technik sind auf allen Endgeräten Mittel zum Steuern des Verbindungsaufbaus und Verbindungsabbaus zwischen den Endgeräten und zum Konfigurieren, Überwachen und Betrieb der UNI-Schnittstellen abgelegt. Die Mittel sind üblicherweise als eine Treiber-Software ausgebildet. Diese Treiber-Software belegt eine große Menge an Speicherplatz in den Endgeräten. Sie ist relativ teuer und bedarf intensiver Wartung, um stets einen reibungslosen Ablauf der Datenübertragung über das ATM-Netzwerk sicherzustellen.

Die Aufgabe der vorliegenden Erfindung besteht deshalb darin, ein Netzwerk der eingangs genannten Art dahingehend auszugestalten und weiterzubilden, daß der Speicherplatzbedarf in den Endgeräten für diese Treiber-Software und der Aufwand für Installation und Wartung der Treiber-Software reduziert werden kann.

Zur Lösung dieser Aufgabe schlägt die Erfindung ausgehend von dem Netzwerk der eingangs genannten Art vor, daß nur auf einigen der Endgeräte, den sog. Proxy-Agenten, Mittel zum Steuern des Verbindungsaufbaus und Verbindungsabbaus zwischen den Endgeräten und zum Konfigurieren, Überwachen und Betrieb der Schnittstellen abgelegt sind.

Die Mittel sind vorzugsweise als eine Treiber-Software auf dem Proxy-Agenten abgelegt. Erfindungsgemäß ist erkannt worden, daß der Speicherplatzbedarf in den Endgeräten für die Treiber-Software zum Steuern des Verbindungsaufbaus und Verbindungsabbaus zwischen den Endgeräten und zum Konfigurieren, Überwachen und Betrieb der Schnittstellen und der Aufwand für Installation und Wartung der Treiber-Software auf einfache Weise dadurch reduziert werden können, daß die Software nur auf ausgewählten Endgeräten, den sog. Proxy-Agenten, abgelegt wird.

Das erfindungsgemäße ATM-Netzwerk ist derart ausgebildet, daß die Proxy-Agenten den Verbindungsaufbau und Verbindungsabbau zwischen allen Endgeräten des Netzwerks steuern können. Dazu müssen die Proxy-Agenten mit den ihnen zugeordneten Endgeräten kommunizieren können. Dies kann über eine Verbindung in dem ATM-Netzwerk geschehen. Sie verläuft dann über einen virtuellen ATM-Kanal zu dem ATM-Vermittlungsswitch und von dort aus über einen anderen virtuellen ATM-Kanal zu dem Endgerät. Beide virtuelle ATM-Kanäle bilden einen virtuellen ATM-Verbindungskanal. Die Kommunikation kann bspw. auf Basis einer Kommunikationsschicht des ATM-Netzwerks, des sog. ATM-Adaptation Layer 5, erfolgen, oder falls ein Local-Area-Network (LAN) existiert - was wegen der großen Verbreitung von LANs häufig der Fall sein wird - kann diese Kommunikation über das LAN erfolgen. Dadurch können die Schnittstellen zwischen allen Endgeräten und den ATM-Vermittlungsswitches des Netzwerks über die Proxy-Agenten angesteuert werden. Die Schnittstellen sind vorzugsweise als User-Network-Interface (UNI) -Schnittstellen ausgebildet.

Das erfindungsgemäße Netzwerk hat den Vorteil, daß die Treiber-Software nur noch auf den Proxy-Agenten installiert, gewartet und betrieben werden muß. Dadurch kann auf allen anderen Endgeräten wertvoller Speicherplatz eingespart werden. Zudem wird dadurch der mit der Software zusammenhängende Zeit- und Kostenaufwand für Installation, Wartung und Betrieb erheblich reduziert.

Gemäß einer vorteilhaften Weiterbildung der vorliegenden Erfindung sind die Informationen zum Konfigurieren, Überwachen und Betrieb der Schnittstellen bspw. in einer Datenbank auf dem mindestens einen Endgerät abgelegt. Eine Datenbank stellt die komfortabelste Alternative dar, grundsätzlich können die Informationen jedoch auch in einer Datei abgelegt sein. Die Datenbank ist vorzugsweise als eine Management-Information-Base (MIB)-Datenbank ausgebildet.

Vorteilhafterweise ist in dem Netzwerk nur ein Proxy-Agent vorgesehen. Dadurch können Speicherbedarf und Zeit- und Kostenaufwand auf ein Minimum reduziert werden. Der eine Proxy-Agent kann die Anforderungen an die Steuerung des Verbindungsaufbaus und Verbindungsabbaus zwischen den Endgeräten in dem ATM-Netzwerk voll erfüllen. Über den einen Proxy-Agenten kann der Verbindungsaufbau und Verbindungsabbau von sämtlichen Schnittstellen gesteuert werden.

Gemäß einer vorteilhaften Weiterbildung der Erfindung sind zwischen den ATM-Vermittlungsswitches und den Proxy-Agenten für jede in dem Netzwerk betriebene Schnittstelle ein Signalisierungskanal und ein Kanal zum Übertragen der Informationen zum Konfigurieren, Überwachen und Betrieb der Schnittstellen vorgesehen. Die Informationen zum Konfigurieren, Überwachen und Betrieb der Schnittstellen werden auch als Integrated-Local-Management-Interface (ILMI)-Informationen bezeichnet. Die Kanäle zum übertragen der Informationen werden dann als ILMI-Kanäle bezeichnet. Die ILMI-Kanäle sind Registrierungskanäle, über die neue Endgeräte angemeldet werden. Darüber hinaus können über die ILMI-Kanäle auch Störungsmeldungen und Parameteränderungen einer UNI-Schnittstelle übermittelt werden. Über den Signalisierungskanal erfolgt der Austausch von Nachrichten zum Auf- und Abbau von Verbindungen, bspw. SETUP, CALL PROCEEDING, CONNECT.

Die Signalisierungskanäle und die Kanäle zum Übertragen der Informationen zum Konfigurieren, Überwachen und Betrieb der Schnittstellen sind vorzugsweise als permanente virtuelle Verbindungen (bspw. als sog. Permanent Virtual Channel Connection, PVCC) ausgebildet.

Vorteilhafterweise weisen die Schnittstellen mehrere Schichten des Breitband-ISDN-Referenzmodells auf, wobei die Schnittstellen zwischen den Endgeräten und den ATM-Vermittlungsswitches eine physikalische Schicht und eine ATM-Schicht aufweisen, und die Schnittstellen zwischen den Proxy-Agenten und den ATM-Vermittlungsswitches zusätzlich eine ATM-Adaptation-Schicht, eine Service-Specific-Connection-Oriented-Protocol (SSCOP)-Schicht, eine Service-Specific-Coordination-Function (SSCF)-Schicht und eine Schicht zum Konfigurieren, Überwachen und Betrieb der Schnittstellen aufweisen.

Bei den ATM-Netzwerken nach dem Stand der Technik sind die virtuellen ATM-Kanäle zwischen einem Endgerät und dem ATM-Vermittlungsswitch für jedes Endgerät gesondert mittels einer Virtual-Path-Identifiers (VPI)-Nummerierung und einer Virtual-Channel-Identifier (VCI)-Nummerierung durchnummeriert. Das stellt wie beim Stand der Technik so lange kein Problem dar, wie jedes Endgerät den eigenen Verbindungsaufbau und Verbindungsabbau zu dem ATM-Vermittlungsswitch steuert und jeder virtuelle ATM-Kanal zwischen diesem Endgerät und dem ATM-Vermittlungsswitch über dessen VPI/VCI-Nummerierung eindeutig identifizierbar ist. Die maximale Anzahl von VPI-Nummern ist bspw. durch den Header der ATM-Zelle (dort stehen z. B. nur 8-bit für die VPI-Nummer zur Verfügung) auf 256 begrenzt.

Wenn der Verbindungsaufbau und Verbindungsabbau jedoch wie bei der vorliegenden Erfindung nicht von allen Endgeräten selbst, sondern von einigen wenigen, möglicherweise sogar nur von einem Proxy-Agenten gesteuert wird, reicht die VPI/VCI-Nummerierung nicht mehr aus, da die virtuellen ATM-Kanäle der Endgeräte nicht eindeutig identifizierbar sind. Eine bestimmte VPI/VCI-Nummer kann keinem bestimmten Endgerät zugeordnet werden. Deshalb müssen zur eindeutigen Identifizierbarkeit eines virtuellen ATM-Kanals neben seiner VPI/VCI-Nummer auch Angaben über das zugeordnete Endgerät übermittelt werden.

Das erfolgt gemäß einer anderen vorteilhaften Weiterbildung der vorliegenden Erfindung dadurch, daß die virtuellen ATM-Kanäle zwischen den Endgeräten und den ATM-Vermittlungsswitches, die Signalisierungskanäle und die Kanäle zum Übertragen der Informationen zum Konfigurieren, Überwachen und Betrieb der Schnittstellen eine durch alle Schnittstellen durchgängige Nummerierung aufweisen, die den Proxy-Agenten und den ATM-Vermittlungsswitches bekannt ist. Die Numerierung wird auch als Virtual-Path-Connection-Identifier (VPCI)-Nummerierung bezeichnet. Der Proxy-Agent teilt dem ATM-Vermittlungsswitch die VPCI-Nummer eines gewünschten virtuellen ATM-Verbindungskanals mit. Der ATM-Vermittlungsswitch wandelt sie dann in die entsprechende VPI/VCI-Nummer des entsprechenden Endgerätes um und spricht so den entsprechenden virtuellen ATM-Kanal des entsprechenden Endgerätes an. Ebenso werden Anfragen eines bestimmten Endgerätes mit einer bestimmten VPI/VCI-Nummer von dem ATM-Vermittlungsswitch in die entsprechende VPCI-Nummer umgewandelt, die dann an den Proxy-Agent weitergeleitet wird.

Vorteilhafterweise haben die Proxy-Agenten Zugriff auf die Informationen zum Konfigurieren, Überwachen und Betrieb der Schnittstellen. Die Informationen zum Konfigurieren, Überwachen und Betrieb der Schnittstellen werden auch als ILMI-Informationen bezeichnet und sind in einer Datenbank, vorzugsweise einer MIB-Datenbank, oder einer anders ausgebildeten MIB abgelegt. Die ILMI-Informationen sind in einer oder mehreren MIBs auf einem oder mehreren Endgeräten abgelegt. Da auch der Proxy-Agent ein Endgerät darstellt, können sie auch dort abgelegt sein. Die ILMI-Informationen umfassen bspw. die Werte der VPI/VCI-Nummern einer Schnittstelle oder andere Parameter der Schnittstelle (Name, Übertragungsrate, etc.).

Die Endgeräte sind vorzugsweise über ein Local-Area-Network (LAN), insbesondere über ein Ethernet-Netzwerk, miteinander verbunden. Je nach Anforderungen an eine Datenübertragung können dann die Daten wahlweise über das ATM-Netzwerk oder über das Ethernet-Netzwerk übertragen werden.

Eine weitere Aufgabe der vorliegenden Erfindung besteht darin, ein Verfahren der eingangs genannten Art dahingehend auszugestalten und weiterzubilden, daß der Speicherplatzbedarf in den Endgeräten für die Treiber-Software und der Aufwand für Installation und Wartung der Treiber-Software reduziert werden kann.

Zur Lösung dieser Aufgabe schlägt die Erfindung vor, daß der Verbindungsaufbau und der Verbindungsabbau zwischen den Endgeräten und das Konfigurieren, Überwachen und der Betrieb der Schnittstellen nur von einigen der Endgeräte, den sog. Proxy-Agenten, gesteuert wird. Zur Steuerung des verbindungsaufbaus und des Verbindungsabbaus ist auf den Proxy-Agenten vorzugsweise eine Treiber-Software abgelegt. Die Proxy-Agenten überwachen die Kommunikation von einem Endgerät zu einem anderen Endgerät des ATM-Netzwerks und konfigurieren, überwachen und steuern den Betrieb der Schnittstellen. Die Schnittstellen sind vorzugsweise als User-Network-Interface (UNI)-Schnittstellen ausgebildet.

Die Informationen zum Konfigurieren, Überwachen und Betrieb der Schnittstellen sind vorzugsweise in einer Datenbank, vorzugsweise in einer Management-Information-Base (MIB)-Datenbank, auf dem mindestens einen Endgerät abgelegt. Eine Datenbank stellt die komfortabelste Alternative die Informationen abzulegen dar, grundsätzlich können die Informationen jedoch auch in einer Datei abgelegt sein.

Vorteilhafterweise werden zwischen den ATM-Vermittlungsswitiches und den Proxy-Agenten für jede in dem Netzwerk betriebene Schnittstelle ein Signalisierungskanal und ein Kanal zum Übertragen der Informationen zum Konfigurieren, Überwachen und Betrieb der Schnittstellen als permanente virtuelle Verbindungen (bspw. als sog. PVCCs) ausgebildet.

Gemäß einer vorteilhaften Weiterbildung der Erfindung werden die Signalisierungs- und Vermittlungsfunktionen beim Verbindungsaufbau und Verbindungsabbau von und zu den Endgeräten von den zuständigen Proxy-Agenten ausgeführt.

Vorzugsweise werden die ATM-Adressen der einem Proxy-Agenten zugeordneten Endgeräte von dem Proxy-Agenten über die entsprechenden Kanäle zum Übertragen der Informationen zum Konfigurieren, Überwachen und Betrieb der Schnittstellen registriert. Falls die Endgeräte außer durch das ATM-Netzwerk auch mittels eines weiteren Netzwerkes (bspw. eines LANs) vernetzt sind, können die ATM-Adressen auch über dieses weitere Netzwerk registriert werden. Die Registrierung der ATM-Adressen erfolgt, wenn das Endgerät seinen ATM-Anschluß neu in Betrieb nimmt oder wenn es aus sonstigen Gründen die ATM-Adresse eines der Endgeräte benötigt. Das kann nach einem Absturz des Endgeräts oder dann der Fall sein, wenn das Endgerät in das ATM-Netzwerk neu integriert wird. Das kann außerdem der Fall sein, wenn der Netzwerkadministrator einem Endgerät eine neue ATM-Adresse zuweisen bzw. eine bestehende ändern möchte. Die ATM-Adressregistrierung obliegt anders als bei den ATM-Netzwerken nach dem Stand der Technik nicht den jeweiligen Endgeräten, sondern allein den Proxy-Agenten.

Vorteilhafterweise werden die Einstellungen an den ATM-Anschlüssen der Endgeräte von den zuständigen Proxy-Agenten veranlaßt. Die Einstellung werden veranlaßt, wenn von dem ATM-Vermittlungsswitch entsprechende Befehle empfangen werden oder der Status der ATM-Anschlüsse von den zuständigen Proxy-Agenten überwacht wird. Die Befehle werden von dem ATM-Vermittlungsswitch zu den Proxy-Agenten über die den ATM-Anschlüssen zugeordneten Kanäle zum Übertragen der Informationen zum Konfigurieren, Überwachen und Betrieb der UNI-Schnittstellen übertragen. Eine Änderung der Einstellungen wird dem ATM-Vermittlungsswitch mitgeteilt.

Gemäß einer vorteilhaften Weiterbildung der Erfindung wird die Verwaltung der Informationen zum Konfigurieren, Überwachen und Betrieb der Schnittstellen in dem mindestens einen Endgerät von dem zuständigen Proxy-Agenten ausgeführt. Die Informationen werden bei Änderungen der Hardwareeinstellungen in den ATM-Anschlüssen von dem zuständigen Proxy-Agenten an die Änderungen angepaßt.

Ein bevorzugtes Ausführungsbeispiel der vorliegenden Erfindung wird im Folgenden anhand der Zeichnungen näher erläutert. Es zeigen:
- Fig. 1: ein erfindungsgemäßes Netzwerk mit drei Endgeräten;
- Fig. 2: ein erfindungsgemäßes Verfahren bei einer Verbindungsanfrage durch Endgerät A; und
- Fig. 3: ein erfindungsgemäßes Verfahren bei einer Verbindungsanfrage an Endgerät B.

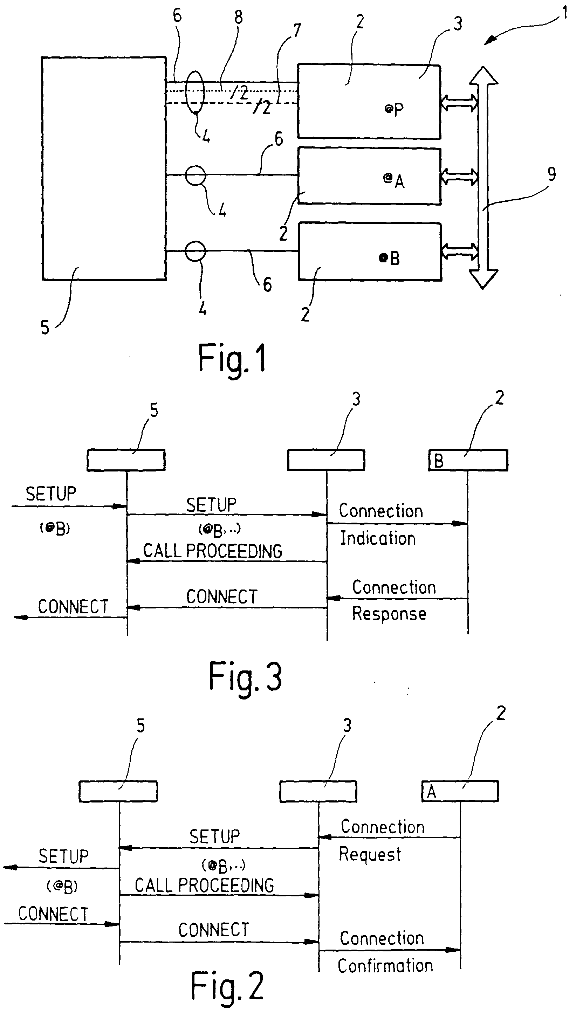

Ein erfindungsgemäßes Netzwerk ist in Fig. 1 in seiner Gesamtheit mit dem Bezugszeichen 1 gekennzeichnet. Das Netzwerk 1 weist insgesamt drei Endgeräte 2 auf, von denen eines als Proxy-Agent 3 ausgebildet ist, die untereinander über eine User-Network-Interface (UNI)-Schnittstelle 4 für jedes Endgerät 2 und einen Asynchronous-Transfer-Mode (ATM)-Vermittlungsswitch 5 verbunden sind. In einem der Endgeräte 2, bspw. in dem Proxy-Agent 3, sind Integrated-Local-Management-Interface (ILMI)-Informationen in einer Management-Information-Base (MIB)-Datenbank abgelegt. Die ILMI-Informationen dienen zum Konfigurieren, Überwachen und zum Betrieb der UNI-Schnittstellen 4 und umfassen bspw. die Werte einer VPI/VCI-Nummerierung, Informationen zur Identifikation eines virtuellen ATM-Kanals oder Parameter der UNI-Schnittstellen 4 (Adresse (@A, @B), Übertragungsrate, etc.). Der Proxy-Agent 3 hat Zugriff auf die ILMI-Informationen in der MIB-Datenbank. Auf diese Weise kann der Proxy-Agent 3 den Verbindungsaufbau und Verbindungsabbau zwischen zwei Endgeräten 2 steuern und die UNI-Schnittstellen 4 konfigurieren, überwachen und deren Betrieb steuern.

Die Endgeräte 2 weisen ATM-Anschlüsse auf, um untereinander über virtuelle ATM-Verbindungskanäle Daten austauschen zu können. Die ATM-Verbindungskanäle bestehen aus mehreren ATM-Kanälen 6 und können als permanente virtuelle Verbindungen oder als vermittelte virtuelle Verbindungen (Switched Virtual Channel Connection, SVCC) ausgebildet sein.

Zwischen dem ATM-Vermittlungsswitch 5 und dem Proxy-Agenten 3 ist für jede in dem Netzwerk 1 betriebene UNI-Schnittstelle 4 (UNI_{A}, UNI_{B}), einschließlich der UNI-Schnittstelle 4 (UNI_{Proxy}) des Proxy-Agenten 3, ein Signalisierungskanal 7 und ein ILMI-Kanal 8 vorgesehen. Demnach ergeben sich bei dem Ausführungsbeispiel aus Fig. 1 drei Signalisierungskanäle 7 und drei ILMI-Kanäle 8. Die Signalisierungskanäle 7 und die ILMI-Kanäle 8 sind als permanente virtuelle Verbindungen ausgebildet. Über den Signalisierungskanal 7 erfolgt der Austausch von Nachrichten zum Auf- und Abbau von Verbindungen, bspw. SETUP-, CALL PROCEEDING-, CONNECT-Signale (vgl. Fig. 2 und 3). Die ILMI-Kanäle 8 sind Registrierungskanäle, über die neue Endgeräte 2 angemeldet werden. Darüber hinaus können über die ILMI-Kanäle 8 auch Störungsmeldungen und Parameteränderungen einer UNI-Schnittstelle 4 übermittelt werden.

Die virtuellen ATM-Kanäle 6 zwischen den Endgeräten 2 und dem ATM-Vermittlungsswitch 5 weisen eine durch alle UNI-Schnittstellen 4 durchgängige Virtual-Path-Connection-Identifier (VPCI)-Nummerierung auf. Die VPCI-Nummerierung des Proxy-Agenten 3 geht von 0 bis a, die VPCI-Nummerierung des Endgerätes A geht dann von a+1 bis b und die des Endgerätes B von b+1 bis c. So ergibt sich eine durchgängige VPCI-Nummerierung von 0 bis c. Dem Proxy-Agent 3 und dem ATM-Vermittlungsswitch 5 ist diese VPCI-Nummerierung bekannt. Der Proxy-Agent 3 kann mittels der VPCI-Nummerierung jeden gewünschten ATM-Kanal 6 eines beliebigen Endgeräts 2 ansprechen. Dazu wird die entsprechende VPCI-Nummer über einen ATM-Kanal 6 von dem Proxy-Agent 3 an den ATM-Vermittlungsswitch 5 übermittelt. Der ATM-Vermittlungsswitch 5 wandelt die VPCI-Nummer dann in eine entsprechende VPI-Nummer des entsprechenden Endgerätes 2 um.

Außer über das ATM-Netzwerk 1 können die Endgeräte 2 auch noch über ein Local-Area-Network (LAN) 9 miteinander verbunden sein. Je nach Anforderungen an eine Datenübertragung können Daten über das ATM-Netzwerk 1 oder über das LAN 9 zwischen den Endgeräten 2 übertragen werden.

In den Fig. 2 und 3 sind die Verfahrensabläufe bei einem erfindungsgemäßen Verfahren dargestellt, zum einen bei einer Verbindungsanfrage durch das Endgerät A (Fig. 2) und zum anderen bei einer Verbindungsanfrage an das Endgerät B (Fig. 3).

In Fig. 2 wird in einem ersten Signalisierungsschritt die Verbindungsanfrage (ConnectionRequest) von Endgerät A an den Proxy-Agenten 3 übermittelt. Diese Verbindungsanfrage erfolgt über eine eigens dafür eingerichtete permanente virtuelle Verbindung zwischen dem Endgerät A und dem Proxy-Agent 3. Diese Verbindung dient dem Austausch von Kontroll- und Statusnachrichten zwischen dem Proxy-Agent 3 und einem der Endgeräte 2, im vorliegenden Fall Endgerät A. Falls ein LAN 9 exisiert, kann es alternativ für diesen Zweck benutzt werden. Der Proxy-Agent 3 sendet dann über den der UNI-Schnittstelle 4 des Endgeräts A zugeordneten Signalisierungskanal 7 eine SETUP(@B, ...)-Meldung an den ATM-Vermittlungsswitch 5. Die SETUP-Meldung enthält u. a. Angaben darüber, mit wem das Endgerät A eine Verbindung wünscht (Endgerät B, Adresse @B), welche Dienstgüte, welche Verkehrsparameter (maximale/ mittlere Bandbreite, Diesntklasse (CBR, VBR-rt, VBR-nrt, ABR, UBR)) und welche Verbindungskonfiguration (Punkt-zu-Punkt oder Punkt-zu-Mehrpunkt) gewünscht wird. Der ATM-Vermittlungsswitch 5 sendet die SETUP-Meldung über den der UNI-Schnittstelle 4 des Endgeräts B zugeordneten Signalisierungskanal 7 wieder zurück an den Proxy-Agenten 3 (vgl. Fig. 3). Der Proxy-Agent 3 teilt dem Endgerät B dann über eine eigens dafür eingerichtete permanente virtuelle Verbindung zwischen dem Endgerät B und dem Proxy-Agent 3 mittels eines ConnectionIndication-Signals den Verbindungswunsch von Endgerät A mit.

Im vorliegenden Ausführungsbeispiel ist der ATM-Vermittlungsswitch 5 aus Fig. 2 identisch mit dem ATM-Vermittlungsswitch 5 aus Fig. 3. Es ist aber auch denkbar, daß es sich um verschiedene ATM-Vermittlungsswitches 5 eines ATM-Netzwerks 1 handelt. In diesem Fall müßte die SETUP-Meldung von dem ersten ATM-Vermittlungsswitch 5 (aus Fig. 2) über einen weiteren Signalisierungskanal zu dem zweiten ATM-Vermittlungsswitch 5 (aus Fig. 3) übertragen werden. Die Schnittstelle zwischen den ATM-Vermittlungsswitches 5 könnte die dann bspw. als ein Private-Network-Network-Interface (PNNI) mit der zugehörigen Signalisierung ausgebildet sein.

Mit dem CALL PROCEEDING-Signal teilt der ATM-Vermittlungsswitch 5 dem Proxy-Agenten P mit, daß die Verbindung aufgebaut wird, aber noch nicht zustande gekommen ist. Sie wird auf dem dem Endgerät A zugeordneten Signalisierungskanal 7 gesendet. In dem konkreten Ausführungsbeispiel heißt das, daß die SETUP-Nachricht von dem ATM-Vermittlungsswitch 5 weitergesendet worden ist. Das CALL PROCEEDING-Signal wird auch von dem Proxy-Agent 3 über den dem Endgerät B zugeordneten Signalisierungskanal 7 an den ATM-Vermittlungsswitch 5 gesendet, um anzuzeigen, daß der Verbindungsaufbau fortschreitet.

Sobald das empfangende Endgerät B den Verbindungswunsch von Endgerät A annimmt, teilt es dies dem Proxy-Agenten 3 mittels eines ConnectionResponse-Signals über eine eigens dafür eingerichtete permanente virtuelle Verbindung mit. Der Proxy-Agent 3 teilt nunmehr dem ATM-Vermittlungsswitch 5 mittels eines CONNECT-Signals über den dem Endgerät B zugeordneten Signalisierungskanal 7 mit, daß die angeforderte Verbindung zustande gekommen ist. Der ATM-Vermittlungsswitch 5 sendet seinerseits über den dem Endgerät A zugeordneten Signalisierungskanal 7 das CONNECT-Signal wiederum an den Proxy-Agent 3. Dieser teilt dem sendenden Endgerät A dann mittels eines ConnectionConfirmation-Signals das Zustandekommen der Verbindung mit. Nun kann die Datenübertragung von Endgerät A nach Endgerät B erfolgen.

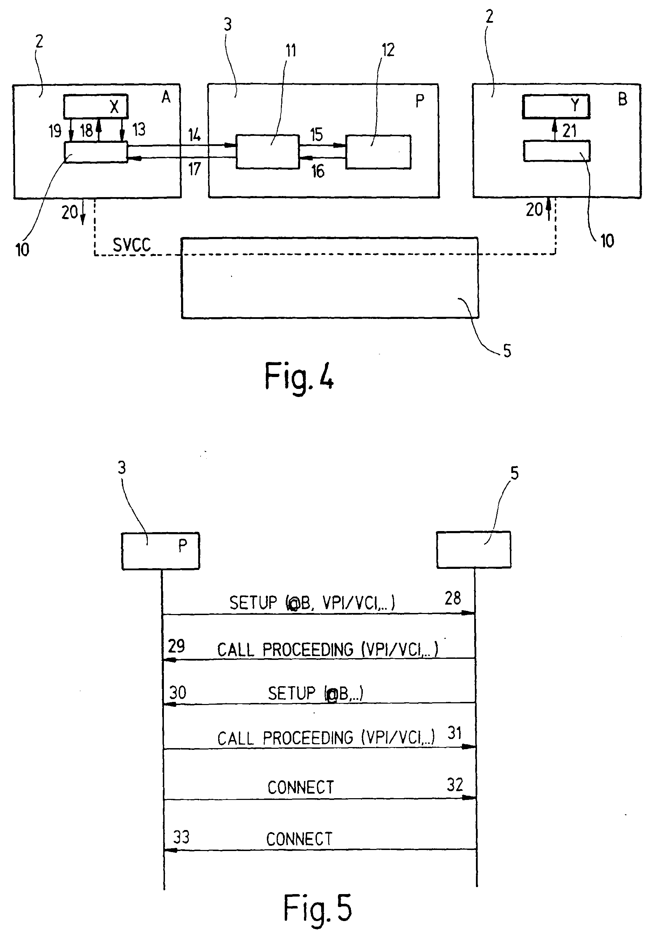

Im Folgenden wird auf die Fig. 4 bis 8 näher eingegangen.

In Fig. 4 wird von der folgenden Konstellation ausgegangen: Eine Anwendung X auf dem Endgerät A will eine größere Menge Daten an eine Anwendung Y auf dem Endgerät B senden. Dazu will sie eine leistungsfähige ATM-Verbindung aufbauen. Für die Übertragung der Daten ist eine höhere Zuverlässigkeit gefordert. Aus diesem Grund wird das Transmission Control Protocol (TCP) für die Kommunikation gewählt.

In heutigen Rechnern gibt es eine Reihe von Service-Schnittstellen, die es gestatten, Verbindungen in einem Netzwerk, das nach dem Integrated Services Digital Network (ISDN)-Standard arbeitet, auf- und abzubauen und zu nutzen. Solche Service-Schnittstellen sind z.B. Common ISDN Application Programming Interface (CAPI), Telephone Application Programming Interface (TAPI) der Firma Microsoft oder Telephone Service Application Programming Interface (TSAPI) der Firma Novell.

In dem vorliegenden Ausführungsbeispiel tauschen die Endgeräte A und B und der Proxy-Agent P Steuerungs- und Statusinformationen über sog. Permanent Virtual Channel Connections (PVCCs) aus, die manuell in den Endgeräten 2 und dem ATM-Vermittlungsswitch 5 bei der Erstinbetriebnahme dieser Endgeräte 2 eingerichtet werden.

Ferner gibt es in dem betreffenden Netzwerk einen erweiterten CAPI-Service (im folgenden mit CAPI* 10 bezeichnet), der neben dem Schmalband- auch das Breitband-ISDN (also ATM) und Transportprotokolle wie TCP oder User Data Protocol (UDP) einschließt. Das UDP dient zur Kommunikation mit geringen Zuverlässigkeitsanforderungen, aber mit hohen Effizienzanforderungen.

Der CAPI*-Service 10 kann verteilt arbeiten. Er hat also Repräsentanten auf Rechnern, die keine Software zur Steuerung von Verbindungsaufbau und Verbindungsabbau haben.

Die Repräsentanten nehmen die Serviceanforderungen entgegen und delegieren sie an einen CAPI*-Proxy 11, der sich direkt an die Verbindungssteuerungssoftware (Call Control) 12 mit einem entsprechenden Verbindungswunsch wendet. Der CAPI*-Proxy 11 meldet die Erfüllung und das Ergebnis des Verbindungswusches an den delegierenden CAPI*-Service 10 zurück.

Bezugnehmend auf Fig. 4 ist der grobe Ablauf des Verbindungsaufbaus wie folgt. Die Anwendung X fordert beim lokalen CAPI*-Service 10 auf dem Endgerät A eine ATM-Verbindung zu der Anwendung Y an (13; die Bezugszeichen für Signale werden nachfolgend in Klammern angegeben). Die Anforderung (13) wird an den CAPI*-Service weitergeleitet (14), der auf dem Rechner des Proxy-Agenten P läuft, hier als CAPI*-Proxy 11 bezeichnet. Dieser wendet sich an die Call-Control 12 mit dem Auftrag, eine ATM-Verbindung (sog. Switched Virtual Circuit Connection, SVCC) zwischen dem Endgerät A und dem Endgerät B aufzubauen (15). Der Erfolg wird dem CAPI*-Proxy 11 gemeldet (16), an das CAPI* 10 weitergeleitet (17) und von diesem schließlich an die Anwendung X weitergeleitet (18).

Danach beauftragt die Anwendung X das CAPI* 10, eine bestimmte Menge Daten über die soeben aufgebaute ATM-Verbindung an die Anwendung Y zu übertragen (19). Das CAPI* 10 sorgt dafür, daß die Daten über die ATM-Verbindung (SVCC) übermittelt (20), von dem CAPI*-Service 10 auf dem Endgerät B empfangen und an die Anwendung Y übergeben werden (22).

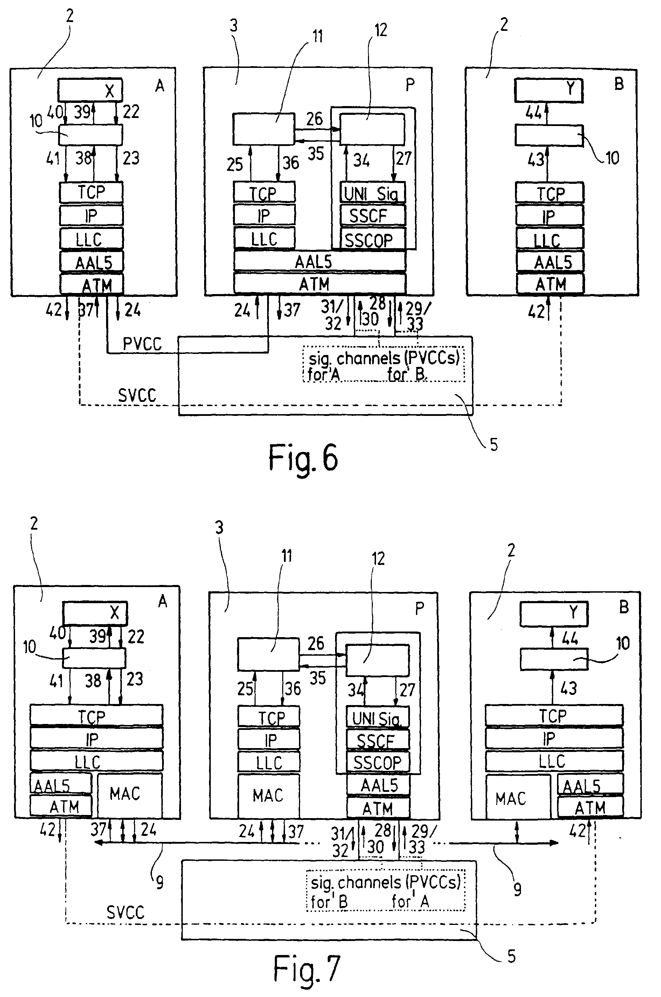

Im einzelnen sieht der Ablauf folgendermaßen aus (vgl. Fig. 6). Zur internen Kommunikation zwischen den Instanzen des verteilten CAPI*-Services wird TCP eingesetzt.

Der Verbindungswunsch (22) der Anwendung X wird von dem lokalen CAPI* 10 über einen lokalen TCP-Protokollstack (23) und über eine eigens im ATM-Netz für die Steuerungs- und Statuskommunikation eingerichtete permanente virtuelle Verbindung (Permanent Virtual Channel Connection, PVCC) zwischen dem Endgerät A und dem Proxy-Agenten P übetragen (24). Der lokale TCP- Protokollstack besteht aus den Kommunikationsprotokollen TCP, einem Internet Protocol (IP), einer Logical Link Control (LLC) und einem ATM Adaptation Layer Number 5 (AAL5). Der Verbindungswunsch (24) wird von einem lokalen TCP-Protokollstack des Proxy-Agenten P übernommen und an den CAPI*-Proxy 11 weitergereicht (25). Dieser bittet die Call-Control 12 (26), eine ATM-Verbindung zwischen dem Endgerät A und dem Endgerät B aufzubauen. Dazu beauftragt die Call-Control 12 einen UNI-Signalisierungsstack (27), eine solche Verbindung aufzubauen. Der UNI-Signalisierungsstack besteht aus UNI 4.0 Signalling, Service-Specific Coordination Function (SSCF), Service-Specific Connection-Oriented Protocol (SSCOP) und AAL5.

Hierzu (vgl. Fig. 5 und Fig. 6) sendet der UNI-Signalisierungsstack über den für das Endgerät A als PVCC eingerichteten Signalisierungskanal eine SETUP-Nachricht (28) an den ATM-Vermittlungsswitch 5 und erhält von diesem eine CALL PROCEEDING-Nachricht (29) zurück. Dann empfängt der UNI-Signalisierungsstack über den für das Endgerät B als PVCC eingerichteten Signalisierungskanal eine SETUP-Nachricht (30) von dem ATM-Vermittlungsswitch 5, verarbeitet sie, sendet eine CALL PROCEEDING-Nachricht (31) und dann eine CONNECT-Nachricht (32) zurück. Der ATM-Vermittlungsswitch 5 reicht die CONNECT-Nachricht (33) über den für Endgerät A eingerichteten Signalisierungskanal an den UNI-Signalisierungsstack in dem Proxy-Agenten P weiter.

Der erfolgreiche Verbindungsaufbau wird von dem UNI-Signalisierungsstack quittiert. Dazu wird ein Quittungssignal (34) an die Call-Control 12, von dieser an den Proxy-CAPI* 11 (35), von diesem wiederum über den TCP-Protokollstack (36) in dem Proxy-Agenten P, den Steuerungs- und Status-PVCC (37) und den TCP-Protokollstack in dem Endgerät A an den dortigen CAPI* 10 (38) und von diesem schließlich an die Anwendung X (39) weitergeleitet.

Jetzt startet die Anwendung X ihre Datenübertragung über den neu aufgebauten SVCC. Sie wendet sich wiederum an den lokalen CAPI* 10 (40), dieser an den lokalen TCP-Protokollstack (41), der die Daten über den SVCC zum Endgerät B überträgt (42). Dort werden sie von dem TCP-Protokollstack des Endgeräts B übernommen und an den lokalen CAPI* 10 übergeben (43), der sie schließlich an die Anwendung Y weiterreicht (44).

Für den Fall, daß ein LAN 9 vorhanden ist, werden die Steuerungs- und Status-PVCCs nicht benötigt. In diesem Fall zeigt die Fig. 7 den Ablauf im einzelnen. Hier wird die interne Kommunikation zwischen den CAPI* 10 über das LAN 9 abgewickelt.

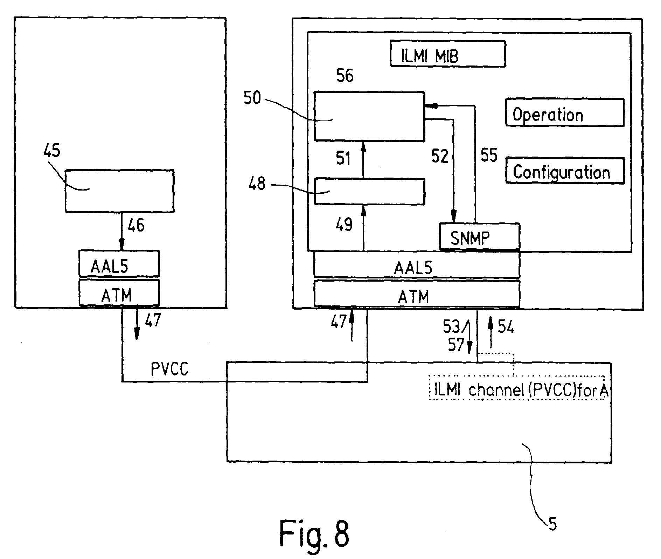

In Fig. 8 ist der Vorgang der Inbetriebnahme des Endgeräts A dargestellt, wobei sich die Zeichnung und die nachfolgenden Erläuterungen auf die Adreßregistrierung beschränken.

An die angeschlossenen Endgeräte 2 werden von dem ATM-Vermittlungsswitch 5 im Rahmen ihrer Inbetriebnahme ATM-Adressen zur Registrierung vergeben. Später können natürlich auch zusätzliche Adressen registriert werden.

Bei der Inbetriebnahme des Endgeräts A sendet ein Interface-Controller 45 ein entsprechendes Signal (46) an die Managementsoftware in dem Proxy-Agenten P. Der Interface-Controller 45 ist als ein kleines spezialisiertes Programm in der lokalen ATM-Treibersoftware ausgebildet. Das Signal (46) wird vorzugsweise mit Hilfe des AAL5 über den Steuerungs- und Status-PVCC gesendet (47). In dem Proxy-Agenten P wird das Signal (46) von einem Überwachungsprogramm (Monitoring) 48 empfangen (49) und verarbeitet. Eine Nachricht wird an ein Adreßregistrierungsprogramm 50 gesendet (51), und von diesem wird eine sog. Adreßregistrierungsprozedur gestartet. In einer gegenseitigen Kommunikation mit dem ATM-Vermittlungsswitch 5 überträgt der Proxy-Agent P mit Hilfe des Simple Network Management Protocols (SNMP) und des AAL5 (52) über den für das Endgerät A als PVCC eingerichteten ILMI-Kanal (53) den Anstoß für die Adreßregistrierung an den ATM-Vermittlungsswitch 5. Daraufhin antwortet dieser mit der Adresse des ATM-Ports, an dem das Endgerät A an den ATM-Vermittlungsswitch 5 angeschlossen ist (54 und 55). Das Adreßregistrierungsprogramm in dem Proxy-Agenten P fügt seine MAC-Adresse an, speichert die so gebildete ATM-Adresse in der für das Endgerät A bestimmten ILMI MIB (56) und teilt sie ferner dem ATM-Vermittlungsswitch (57) mit.

In den Fig. 4, Fig. 6, Fig. 7 und Fig. 8 bezeichnen die dunkel unterlegten Flächen die Teile der Treiber-Software, die bei dem erfindungsgemäßen Netzwerk in den Endgeräten A und B eingespart werden können, weil sie nur in den Proxy-Agenten P installiert werden.

## Patentansprüche

1. Netzwerk (1) von mehreren Endgeräten (2), insbesondere von Computern, die untereinander über eine Schnittstelle (4) für jedes Endgerät (2) und mindestens einen Asynchronous-Transfer-Mode (ATM)-Vermittlungsswitch (5) verbunden sind, wobei auf mindestens einem der Endgeräte (2) Informationen zum Konfigurieren, Überwachen und Betrieb der Schnittstellen (4) abgelegt sind und wobei die Endgeräte (2) ATM-Anschlüsse aufweisen und untereinander über virtuelle ATM-Kanäle (6) Daten austauschen, dadurch gekennzeichnet, daß nur auf einigen der Endgeräte (2), den sog. Proxy-Agent (3), Mittel zum Steuern des Verbindungsaufbaus und Verbindungsabbaus zwischen den Endgeräten (2) und zum Konfigurieren, Überwachen und Betrieb der Schnittstellen (4) abgelegt sind.

2. Netzwerk (1) nach Anspruch 1, dadurch gekennzeichnet, daß die Informationen zum Konfigurieren, Überwachen und Betrieb der Schnittstellen (4) in einer Datenbank auf dem mindestens einen Endgerät (2) abgelegt sind.

3. Netzwerk (1) nach Anspruch 1 oder 2, dadurch gekennzeichnet, daß in dem Netzwerk (1) nur ein Proxy-Agent (3) vorgesehen ist.

4. Netzwerk (1) nach einem der Ansprüche 1 bis 3, dadurch gekennzeichnet, daß zwischen den ATM-Vermittlungsswitches (5) und den Proxy-Agenten (3) für jede in dem Netzwerk (1) betriebene Schnittstelle (4) ein Signalisierungskanal (7) und ein Kanal (8) zum Übertragen der Informationen zum Konfigurieren, Überwachen und Betrieb der Schnittstellen (4) vorgesehen sind.

5. Netzwerk (1) nach Anspruch 4, dadurch gekennzeichnet, daß die Signalisierungskanäle (7) und die Kanäle (8) zum Übertragen der Informationen zum Konfigurieren, Überwachen und Betrieb der Schnittstellen (4) als permanente virtuelle Verbindungen ausgebildet sind.

6. Netzwerk (1) nach einem der Ansprüche 1 bis 5, dadurch gekennzeichnet, daß die Schnittstellen (4) mehrere Schichten des Breitband-ISDN-Referenzmodells aufweisen, wobei die Schnittstellen (4) zwischen den Endgeräten (2) und den ATM-Vermittlungsswitches (5) eine physikalische Schicht und eine ATM-Schicht aufweisen, und die Schnittstellen (4) zwischen den Proxy-Agenten (3) und den ATM-Vermittlungsswitches (5) zusätzlich eine ATM-Adaptation-Schicht, eine Service-Specific-Connection-Oriented-Protocol (SSCOP)-Schicht, eine Service-Specific-Coordination-Function (SSCF)-Schicht und eine Schicht zum Konfigurieren, Überwachen und Betrieb der Schnittstellen (4) aufweisen.

7. Netzwerk (1) nach einem der Ansprüche 4 bis 6, dadurch gekennzeichnet, daß die virtuellen ATM-Kanäle (6) zwischen den Endgeräten (2) und den ATM-Vermittlungsswitches (5), die Signalisierungskanäle (7) und die Kanäle (8) zum Übertragen der Informationen zum Konfigurieren, Überwachen und Betrieb der Schnittstellen (4) eine durch alle Schnittstellen (4) durchgängige Nummerierung aufweisen, die den Proxy-Agenten (3) und den ATM-Vermittlungsswitches (5) bekannt ist.

8. Netzwerk (1) nach Anspruch 7, dadurch gekennzeichnet, daß die Proxy-Agenten (3) Zugriff auf die Informationen zum Konfigurieren, Überwachen und Betrieb der Schnittstellen (4) haben.

9. Netzwerk (1) nach einem der Ansprüche 1 bis 7, dadurch gekennzeichnet, daß die Endgeräte (2) über ein Local-Area-Network (LAN) miteinander verbunden sind.

10. Netzwerk (1) nach Anspruch 9, dadurch gekennzeichnet, daß das LAN als ein Ethernet-Netzwerk ausgebildet ist.

11. Verfahren zum Betrieb eines Netzwerks (1) von mehreren Endgeräten (2), insbesondere von Computern, die untereinander über eine Schnittstelle (4) für jedes Endgerät (2) und mindestens einen Asynchronous-Transfer-Mode (ATM)-Vermittlungsswitch (5) verbunden sind, wobei auf mindestens einem der Endgeräte (2) Informationen zum Konfigurieren, Überwachen und Betrieb der Schnittstellen (4) abgelegt sind und wobei die Endgeräte (2) ATM-Anschlüsse aufweisen und untereinander über virtuelle ATM-Kanäle (6) Daten austauschen, dadurch gekennzeichnet, daß der Verbindungsaufbau und der Verbindungsabbau zwischen den Endgeräten (2) und das Konfigurieren, Überwachen und der Betrieb der Schnittstellen (4) nur von einigen der Endgeräte (2), den sog. Proxy-Agenten (3), gesteuert wird.

12. Verfahren nach Anspruch 11, dadurch gekennzeichnet, daß die Informationen zum Konfigurieren, Überwachen und Betrieb der Schnittstellen (4) in einer Datenbank auf dem mindestens einen Endgerät (2) abgelegt werden.

13. Verfahren nach Anspruch 11 oder 12, dadurch gekennzeichnet, daß zwischen den ATM-Vermittlungsswitches (5) und den Proxy-Agenten (3) für jede in dem Netzwerk (1) betriebene Schnittstelle (4) ein Signalisierungskanal (7) und ein Kanal (8) zum Übertragen der Informationen zum Konfigurieren, Überwachen und Betrieb der Schnittstellen (4) als permanente virtuelle Verbindungen ausgebildet werden.

14. Verfahren nach Anspruch 13, dadurch gekennzeichnet, daß die Signalisierungs- und Vermittlungsfunktionen bei dem Verbindungsaufbau und dem Verbindungsabbau von und zu den Endgeräten (2) von den zuständigen Proxy-Agenten (3) ausgeführt werden.

15. Verfahren nach Anspruch 13 oder 14, dadurch gekennzeichnet, daß die ATM-Adressen der einem Proxy-Agenten (3) zugeordneten Endgeräte (2) von dem Proxy-Agenten (3) über die entsprechenden Kanäle (8) zum Übertragen der Informationen zum Konfigurieren, Überwachen und Betrieb der Schnittstellen (4), registriert werden.

16. Verfahren nach Anspruch 15, dadurch gekennzeichnet, daß die Einstellungen an den ATM-Anschlüssen der Endgeräte (2) von den zuständigen Proxy-Agenten (3) veranlaßt werden.

17. Verfahren nach Anspruch 15, dadurch gekennzeichnet, daß die Verwaltung der Informationen zum Konfigurieren, Überwachen und Betrieb der Schnittstellen (4) in dem mindestens einen Endgerät (2) von dem zuständigen Proxy-Agenten (3) ausgeführt wird.
